# EUROPEAN PATENT APPLICATION

(11) **EP 4 044 470 A1**
(43) Date of publication of application: **17.08.2022**
(21) Application number: 20880662.0
(22) Date of filing: 16.06.2020
(51) Int. Cl.: H04L 1/00

(54) **COMMUNICATION METHOD, DEVICE, AND STORAGE MEDIUM**

(30) Priority: 29.10.2019 CN 201911039483
(71) Applicant: Huawei Technologies Co., Ltd., Shenzhen, Guangdong 518129 (CN)
(72) Inventor: XU, Li, Shenzhen, Guangdong 518129 (CN); ZHONG, Qiwen, Shenzhen, Guangdong 518129 (CN); ZHU, Zhigang, Shenzhen, Guangdong 518129 (CN); LI, Rixin, Shenzhen, Guangdong 518129 (CN)
(74) Representative: Isarpatent
(86) International application number: PCT/CN2020/096426
(87) International publication number: WO 2021/082468

(57) **Abstract**

Embodiments of this application provide a communication method and device, and a storage medium, to resolve a problem that information about a clock frequency and a clock phase of a service cannot be correctly transmitted to a receiver or correctly recovered because transparent transmission of the information about the clock frequency and the clock phase of the service cannot be implemented. In embodiments of this application, because a value of k based on a reference data unit is inserted into a second data flow, and the value of k can indicate a quantity of third data units included between a second data unit and the reference data unit in a first data flow, a receive end device can completely recover the first data flow based on the value of k, so as to resolve the problem that the information about the clock frequency and the clock phase of the service cannot be correctly transmitted to the receiver or correctly recovered because transparent transmission of the information about the clock frequency and the clock phase of the service cannot be implemented.

## Description

### CROSS-REFERENCE TO RELATED APPLICATION

This application claims priority to Chinese Patent Application No. 201911039483.5, filed with the China National Intellectual Property Administration on October 29, 2019 and entitled "COMMUNICATION METHOD AND DEVICE, AND STORAGE MEDIUM", which is incorporated herein by reference in its entirety.

### TECHNICAL FIELD

This application relates to the communications field, and in particular, to a communication method and device, and a storage medium.

### BACKGROUND

Standards related to the 802.3 standard Ethernet (Standard Ethernet, StdE) defined by the Institute of Electrical and Electronics Engineers (Institute of Electrical and Electronics Engineers, IEEE) are widely applied in the industry. A standard Ethernet physical interface is an asynchronous communication interface, and allows a clock frequency difference of ±100 ppm (namely, one part per ten thousand). For example, in a 10GE network, for two physical interfaces each with a nominal bandwidth of 10 Gbit/s, one of the two physical interfaces may be one ten-thousandth greater than the nominal value, and the other may be one ten-thousandth less than the nominal value, namely, 10 x (1 + 0.0001) Gbit/s and 10 x (1 - 0.0001) Gbit/s, respectively. A logical port inherits a clock frequency feature of the physical interface, and also has a difference of 100 ppm.

The flexible Ethernet (FlexE) combines technical features of the Ethernet and transport networks (for example, an optical transport network (Optical Transport Network, OTN) and a synchronous digital hierarchy (Synchronous Digital Hierarchy, SDH)), and is an important milestone in the evolution of the Ethernet technology. As flexible Ethernet technologies emerge, an Ethernet physical interface has a feature of virtualization. A plurality of Ethernet physical interfaces may be cascaded to support several virtual logical ports. For example, a 400-gigabit (400 Gigabit, 400G) flexible Ethernet physical interface group obtained by cascading four 100-gigabit Ethernet (100 Gigabit Ethernet, 100GE) physical interfaces can support several logical ports. The ITU-T defines a next-generation transport network technology system (Metro Transport Network, MTN) by reusing the FlexE logic to meet requirements for new services such as 5G. The MTN is a new transport network consisting of an MTN section layer (MTN section layer) and an MTN path layer (MTN path layer). A physical layer is compatible with existing standard 50GBASE R, 100GBASE R, 200GBASE R and 400GBASE R interfaces. Currently, the ITU-T has completed project initiation of the technology standard system, including G.mtn "MTN interface and frame structure", G.mtn-arch "MTN functional architecture", G.mtn-eqpt "MTN equipment functional model", G.mtn-prot "MTN linear protection", G.mtn-mgmt "MTN management and control", and the like.

When a current mainstream transport network transmits a service on an asynchronous Ethernet interface, blocks need to be added and deleted hop by hop, so that a service rate adapts to a bandwidth rate difference between physical interfaces or logical ports. However, addition or deletion of blocks in a service flow causes loss of information about a clock frequency and a clock phase of services, in other words, transparent transmission of the information about the clock frequency and the clock phase of the services cannot be implemented, and therefore, the transport network cannot meet requirements for transparent transmission of the clock frequency and the time phase of services. As a result, time and frequency information of these services cannot be correctly transmitted to a receiver or correctly recovered.

### SUMMARY

Embodiments of this application provide a communication method and device, and a storage medium, to resolve a problem that time and frequency information of a service cannot be correctly transmitted to a receiver or correctly recovered because transparent transmission of information about a clock frequency and a clock phase of the service cannot be implemented.

According to a first aspect, an embodiment of this application provides a communication method. The method includes: A transmit end device obtains a first data flow, where the first data flow includes a first data unit and N second data units, and N is a positive integer. The transmit end device inserts a number mark k into one second data unit of the N second data units in the first data flow to generate a second data flow, where the number mark k is used to indicate a quantity of third data units included between the second data unit and the first data unit in the first data flow, and k is an integer greater than or equal to zero. The transmit end device sends the second data flow. Because there is a value of k in the second data flow, and the value of k can indicate the quantity of third data units included between the second data unit and the first data unit in the first data flow, a receive end device can recover the first data flow based on the value of k, so as to resolve a problem that time and frequency information of a service cannot be correctly transmitted to a receiver or correctly recovered because transparent transmission of information about a clock frequency and a clock phase of the service cannot be implemented.

In a possible implementation, one or more second data units of the N second data units in the second data flow further include first indication information. For one second data unit that is of the N second data units in the second data flow and that includes the first indication information, the first indication information is used to indicate that there is a number mark k in the second data unit. The first indication information may be represented by reusing information in another field in a data unit in the conventional technology, or may be in a newly defined field in a data unit. Adding the first indication information can improve recognition of the second data unit.

In a possible implementation, the one second data unit of the N second data units in the second data flow includes a start data unit. The start data unit is usually a starting point of a packet, and generally, there are a large quantity of bits in the start data unit for placing the value of k, so that the value of k can be large, and additional bandwidth is not occupied.

In a possible implementation, for the one second data unit of the N second data units in the second data flow, when the quantity of third data units included between the second data unit and the first data unit is less than a first threshold, the value of k is the quantity of third data units included between the second data unit and the first data unit; or when the quantity of third data units included between the second data unit and the first data unit is not less than a first threshold, the value of k is a value obtained by performing a modulo operation on the first threshold and the quantity of third data units included between the second data unit and the first data unit. In this way, on one hand, the quantity of third data units included between the second data unit and the first data unit in the first data flow can be intuitively determined based on the value of k. On the other hand, setting the first threshold can avoid an excessively large value of k.

In a possible implementation, that the transmit end device inserts a number mark k into one second data unit of the N second data units in the first data flow to generate a second data flow includes: The transmit end device counts, starting from the first data unit, the third data units in the first data flow, to obtain a first count, and inserts the number mark k into the one second data unit of the N second data units in the first data flow based on the first count corresponding to the second data unit, to generate the second data flow, where the first count corresponding to the second data unit is used to indicate the quantity of third data units included between the second data unit and the first data unit in the first data flow. The value of k is obtained by counting, starting from the first data unit, the third data units in the first data flow. This solution is simple and easy to implement.

In a possible implementation, after the transmit end device counts, starting from the first data unit, the third data units in the first data flow to obtain the first count, the method further includes: when a value of the first count reaches the first threshold, setting the value of the first count to zero; and after the value of the first count is set to zero, continuing to count the quantity of third data units in the first data flow. In other words, in this embodiment of this application, a starting point is the first data unit, and counting of the third data units in the first data flow starts from the starting point. In a counting process, each time the first count reaches the threshold, the first count is set to zero for one time. Setting the first threshold can avoid an excessively large value of k.

In a possible implementation, the third data units included between the one second data unit of the N second data units and the first data unit in the first data flow include all data units between the second data unit and the first data unit in the first data flow. In this solution, all data units after the first data unit in the first data flow can be counted. This solution is simple and easy to implement.

In a possible implementation, the third data units included between the one second data unit of the N second data units and the first data unit in the first data flow include an idle data unit and/or a second preset data unit between the second data unit and the first data unit in the first data flow. In this solution, the idle data unit and/or the second preset data unit after the first data unit in the first data flow can be counted. In this way, a count value is not excessively large.

According to a second aspect, an embodiment of this application provides a communication method. The method includes: A receive end device receives a third data flow, where the third data flow includes a first data unit and N second data units, N is a positive integer, one second data unit of the N second data units in the third data flow includes a number mark k, the number mark k is used to indicate a quantity of third data units included between the second data unit and the first data unit in a first data flow, and k is an integer greater than or equal to zero; and the receive end device recovers the first data flow from the third data flow based on a value of k in the second data unit in the third data flow. Because the value of k is in the third data flow, and the value of k can indicate the quantity of third data units included between the second data unit and the first data unit in the first data flow, the receive end device can recover the first data flow based on the value of k, so as to resolve a problem that time and frequency information of a service cannot be correctly transmitted to a receiver and correctly recovered because transparent transmission of information about a clock frequency and a clock phase of the service cannot be implemented.

In a possible implementation, that the receive end device recovers the first data flow from the third data flow based on a value of k in the second data unit in the third data flow includes: The receive end device determines a value of m corresponding to the one second data unit of the N second data units in the third data flow, where m corresponding to the one second data unit is used to indicate a quantity of third data units included between the second data unit and the first data unit in the third data flow, and m is an integer greater than or equal to zero; and the receive end device recovers the first data flow from the third data flow based on the value of m corresponding to the one second data unit of the N second data units in the third data flow and the value of k in the one second data unit of the N second data units in the third data flow. Because the receive end device can determine the value of m, and m is used to indicate the quantity of third data units included between the second data unit and the first data unit in the third data flow, the receive end device compares the value of m with the value of k, and performs reverse addition or deletion of data units in the third data flow (performing reverse addition or deletion of data units in the third data flow means adding data units that have been deleted to the third data flow or deleting data units that have been added from the third data flow), to recover the first data flow.

In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is less than a second threshold: if the value of m corresponding to the second data unit is greater than the value of k in the second data unit, reducing (m - k + correction value) idle data units between the second data unit and the first data unit in the third data flow; and if the value of m corresponding to the second data unit is less than the value of k in the second data unit, adding (k - m + correction value) idle data units between the second data unit and the first data unit in the third data flow. In this way, reverse addition or deletion of data units in the third data flow can be performed based on the value of m and the value of k, to recover the first data flow. In addition, the correction value can improve flexibility of the solution. There are many possible values of the correction value, for example, the correction value may be 0, +1, or -1. When the correction value is 0, it may alternatively be described as that no correction value is added in the process of reverse addition or deletion of data units.

In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is not less than a second threshold: if the value of m corresponding to the second data unit is greater than the value of k in the second data unit, adding (k + first threshold - m + correction value) idle data units between the second data unit and the first data unit in the third data flow; and if the value of m corresponding to the second data unit is less than the value of k in the second data unit, reducing (m + first threshold - k + correction value) idle data units between the second data unit and the first data unit in the third data flow. In this way, on one hand, reverse addition or deletion of data units in the third data flow can be performed based on the value of m and the value of k, to recover the first data flow. On the other hand, when the difference between m and k is relatively large, the first threshold is added for adjustment. This lays a foundation for specific operation details in an actual application scenario.

In a possible implementation, the correction value is flexible, for example, may be 0, +1, -1, and the like. When the correction value is 0, the following possible implementations may also be provided in this embodiment of this application:

In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is less than a second threshold: if the value of m corresponding to the second data unit is greater than the value of k in the second data unit, reducing (m - k) idle data units between the second data unit and the first data unit in the third data flow; and if the value of m corresponding to the second data unit is less than the value of k in the second data unit, adding (k - m) idle data units between the second data unit and the first data unit in the third data flow. In this way, reverse addition or deletion of data units in the third data flow can be performed based on the value of m and the value of k, to recover the first data flow.

In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is not less than a second threshold: if the value of m corresponding to the second data unit is greater than the value of k in the second data unit, adding (k + first threshold - m) idle data units between the second data unit and the first data unit in the third data flow; and if the value of m corresponding to the second data unit is less than the value of k in the second data unit, reducing (m + first threshold - k) idle data units between the second data unit and the first data unit in the third data flow. In this way, on one hand, reverse addition or deletion of data units in the third data flow can be performed based on the value of m and the value of k, to recover the first data flow. On the other hand, when the difference between m and k is relatively large, the first threshold is added for adjustment. This lays a foundation for specific operation details in an actual application scenario. In other words, in this embodiment of this application, when the correction value is 0, the correction value may be written or may not be written in the formula for a quantity of idle data units to be added or deleted.

In a possible implementation, when the quantity of third data units included between the second data unit and the first data unit in the third data flow is less than the first threshold, the value of m is the quantity of third data units included between the second data unit and the first data unit; or when the quantity of third data units included between the second data unit and the first data unit in the third data flow is not less than the first threshold, the value of m is a value obtained by performing a modulo operation on the first threshold and the quantity of third data units included between the second data unit and the first data unit in the third data flow. In this way, on one hand, the quantity of third data units included between the second data unit and the first data unit in the third data flow can be intuitively determined by using the value of m. On the other hand, setting the first threshold can avoid an excessively large value of m.

In a possible implementation, that the receive end device determines a value of m corresponding to the one second data unit of the N second data units in the third data flow includes: The receive end device counts, starting from the first data unit in the third data flow, the third data units in the third data flow, to obtain a second count; and determines, based on the second count corresponding to the second data unit, the value of m corresponding to the one second data unit of the N second data units in the third data flow, where the second count corresponding to the second data unit is used to indicate the quantity of third data units included between the second data unit and the first data unit in the third data flow; and after the receive end device recovers the first data flow from the third data flow based on the value of m corresponding to the one second data unit of the N second data units in the third data flow and the value of k in the one second data unit of the N second data units in the third data flow, the method further includes: updating a value of the second count to the value of k in the second data unit. The value of m is obtained by counting, starting from the first data unit, the third data units in the third data flow. This solution is simple and easy to implement.

In a possible implementation, after the receive end device counts, starting from the first data unit in the third data flow, the third data units in the third data flow to obtain a second count, the method further includes: When the value of the second count reaches the first threshold, the value of the second count is set to zero; and after the value of the second count is set to zero, counting of the quantity of third data units in the third data flow is continued. In other words, in this embodiment of this application, a starting point is the first data unit, and counting of the third data units in the third data flow starts from the starting point. In a counting process, each time the second count reaches the threshold, the second count is set to zero for one time. Setting the first threshold can avoid an excessively large value of m.

In a possible implementation, one or more second data units of the N second data units in the third data flow further include first indication information. For one second data unit that is of the N second data units in the third data flow and that includes the first indication information, the first indication information is used to indicate that there is a number mark k in the second data unit. The first indication information may be represented by reusing information in another field in a data unit in the conventional technology, or may be a newly defined field in a data unit. Carrying of the first indication information can improve recognition of the second data unit.

In a possible implementation, the one second data unit of the N second data units in the third data flow includes a start data unit. The start data unit is usually a starting point of a packet, and generally, there are a large quantity of bits in the start data unit for placing the value of k, so that the value of k can be large, and additional bandwidth is not occupied.

In a possible implementation, the third data units included between the one second data unit of the N second data units and the first data unit in the first data flow include all data units between the second data unit and the first data unit in the first data flow. In this solution, all data units after the first data unit in the first data flow can be counted. This solution is simple and easy to implement.

In a possible implementation, the third data units included between the one second data unit of the N second data units and the first data unit in the first data flow include an idle data unit and/or a second preset data unit between the second data unit and the first data unit in the first data flow. In this solution, the idle data unit and/or the second preset data unit after the first data unit in the first data flow can be counted. In this way, a count value is not excessively large.

In a possible implementation, the third data units included between the one second data unit of the N second data units and the first data unit in the third data flow include all data units between the second data unit and the first data unit in the third data flow. In this solution, all data units after the first data unit in the third data flow can be counted. This solution is simple and easy to implement.

In a possible implementation, the third data units included between the one second data unit of the N second data units and the first data unit in the third data flow include an idle data unit and/or a second preset data unit between the second data unit and the first data unit in the third data flow. In this solution, the idle data unit and/or the second preset data unit after the first data unit in the third data flow can be counted. In this way, a count value is not excessively large.

According to a third aspect, a communication device is provided. The communication device includes a transceiver unit and a processing unit, to perform any implementation of any communication method according to the first aspect and the second aspect. The transceiver unit is configured to perform functions related to sending and receiving. Optionally, the transceiver unit includes a receiving unit and a sending unit. In a design, the communication device is a communication chip, and the transceiver unit may be an input/output circuit or a port of the communication chip.

In another design, the transceiver unit may be a transmitter and a receiver, or the transceiver unit may be a transmitting machine and a receiving machine.

Optionally, the communication device further includes modules that may be configured to perform any implementation of any communication method according to the first aspect and the second aspect.

According to a fourth aspect, a communication device is provided. The communication device is a sending device or a receiving device. The communication device includes a processor and a memory. Optionally, the communication device further includes a transceiver. The memory is configured to store a computer program or instructions. The processor is configured to invoke the computer program or the instructions from the memory and run the computer program or the instructions. When the processor executes the computer program or the instructions in the memory, the communication device is enabled to perform any implementation of any communication method according to the first aspect and the second aspect.

Optionally, there are one or more processors, and there are one or more memories.

Optionally, the memory may be integrated with the processor, or the memory and the processor are disposed separately.

Optionally, the transceiver may include a transmitting machine (transmitter) and a receiving machine (receiver).

According to a fifth aspect, a communication device is provided, which includes a processor. The processor is coupled to a memory, and may be configured to perform the method according to either of the first aspect and the second aspect and any one of the possible implementations of the first aspect and the second aspect. Optionally, the communication device further includes the memory. Optionally, the communication device further includes a communication interface, and the processor is coupled to the communication interface.

In an implementation, the communication device is a network device. When the communication device is a network device, the communication interface may be a transceiver or an input/output interface. Optionally, the transceiver may be a transceiver circuit. Optionally, the input/output interface may be an input/output circuit.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided, and the system includes the foregoing transmit end device and the receive end device.

According to a seventh aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or perform the method according to any implementation of the first aspect and the second aspect.

According to a ninth aspect, a processing device is provided, and includes an input circuit, an output circuit, and a processing circuit. The processing circuit is configured to: receive a signal through the input circuit, and transmit a signal through the output circuit, so that the method according to either of the first aspect and the second aspect and any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

### BRIEF DESCRIPTION OF DRAWINGS

FIG. 1 is a schematic diagram of an architecture of a communication system according to an embodiment of this application;
FIG. 2a is a schematic flowchart of a communication method according to an embodiment of this application;
FIG. 2b is a schematic diagram of an architecture of a communication system according to an embodiment of this application;
FIG. 2c is a schematic diagram of an architecture of a communication system according to an embodiment of this application;
FIG. 2d is a schematic flowchart of another communication method according to an embodiment of this application;
FIG. 3a is a schematic diagram of a structure of a second data flow according to an embodiment of this application;
FIG. 3b is a schematic diagram of another structure of a second data flow based on FIG. 3a;
FIG. 4a shows a 64B/66B coding format of a start block according to an embodiment of this application;
FIG. 4b is a schematic diagram of six block formats according to an embodiment of this application;
FIG. 4c is a schematic diagram of three block formats according to an embodiment of this application;
FIG. 4d is a schematic diagram of one block format according to an embodiment of this application;
FIG. 5 is a schematic flowchart of another communication method according to an embodiment of this application;
FIG. 6 is a schematic diagram of a structure of a communication device according to an embodiment of this application;
FIG. 7 is a schematic diagram of a structure of another communication device according to an embodiment of this application; and
FIG. 8 is a schematic diagram of a structure of another communication device according to an embodiment of this application.

### DESCRIPTION OF EMBODIMENTS

Technical solutions provided in embodiments of this application may be applied to a metro transport network (Metro Transport Network, MTN), or may be applied to another type of network, for example, a flexible Ethernet, an Ethernet, an optical transport network (Optical Transport Network, OTN), a synchronous digital hierarchy (Synchronous Digital Hierarchy, SDH) network, or a network with a FlexE feature that allows addition or deletion of a data unit in a transmission process of a service signal flow. For ease of description, the MTN is mainly used as an example for description in embodiments of this application.

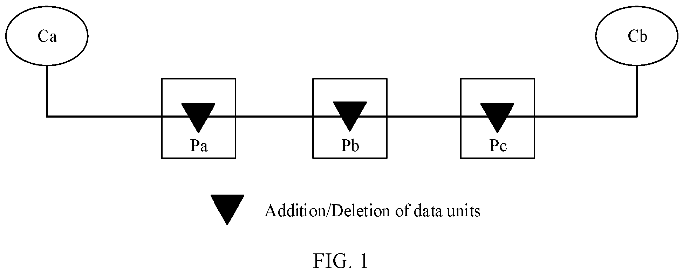

FIG. 1 is a schematic diagram of an architecture of a communication system to which embodiments of this application are applicable. In FIG. 1, a service between a client device Ca and a client device Cb may be carried by a network device Pa, a network device Pb, and a network device Pc. The network device Pa, the network device Pb, and the network device Pc may be metro transmission network devices, flexible Ethernet devices, Ethernet devices, OTN devices, SDH devices, or the like. The client device in embodiments of this application may be a router, a switch, or the like.

When a data flow is transmitted on an intermediate device, the intermediate device may add some data units to the data flow, or delete some data units from the data flow. For example, an intermediate network device is a metro transmission network device. When the metro transmission network carries a service, an idle block needs to be added or deleted hop by hop, so that a service rate adapts to a bandwidth rate difference between physical interfaces or between logical ports.

In embodiments of this application, the data units may be added or deleted in a plurality of specific implementations. For example, one or more data units may be added to the data flow. For another example, one or more data units may be deleted from the data flow. For another example, one or more data units may be added to the data flow, and one or more data units may be deleted from the data flow.

In embodiments of this application, the added or deleted data unit may be an idle data unit and/or a second preset data unit. In embodiments of this application, the idle data unit has a plurality of formats, for example, including an idle packet at a media access control (Media Access Control, MAC) layer or an upper layer of the media access control layer, an MII idle byte unit, and an idle block in a physical layer coding format. A coding format of the idle block is, for example, a 64B/66B coding format, an 8B/10B coding format, or a 512B/514B coding format. The idle block may also be referred to as an IDLE block. Second preset data units are some data units that can be added or deleted by the intermediate device in a data transmission process, for example, some ordered set blocks and low power idle (LPI) blocks that can be deleted by the intermediate device.

In an optional implementation, a first data flow may be a service data flow including an interpacket gap (Interpacket Gap, IPG), for example, an Ethernet packet service. The IPG may include an idle data unit, a second preset data unit, and/or the like. Addition or deletion of data units described in embodiments of this application may include: for example, adding some data units (for example, adding idle data units) to the IPG; for another example, deleting some data units (for example, deleting idle data units) from the IPG; or for another example, adding some data units (for example, adding idle data units) to the IPG, and deleting some data units (for example, deleting second preset data units) from the IPG. It should be noted that only addition or deletion of data units to or from the IPG is used as an example for description herein. During actual implementation, the data units to be added or deleted in embodiments of this application may include a data unit of the IPG, or may include a data unit at another location other than the IPG. Locations of the data units to be added or deleted are not limited in embodiments of this application.

There may be a plurality of intermediate devices, in other words, data unit addition or deletion may be performed on the first data flow for one or more times. This is not limited in embodiments of this application. In embodiments of this application, a transmit end device may also perform idle data unit addition or deletion, where the addition or deletion process is the same as that in the conventional technology. For intermediate devices in the metro transmission network, the data unit addition or deletion process that is the same as that in the conventional technology may be performed.

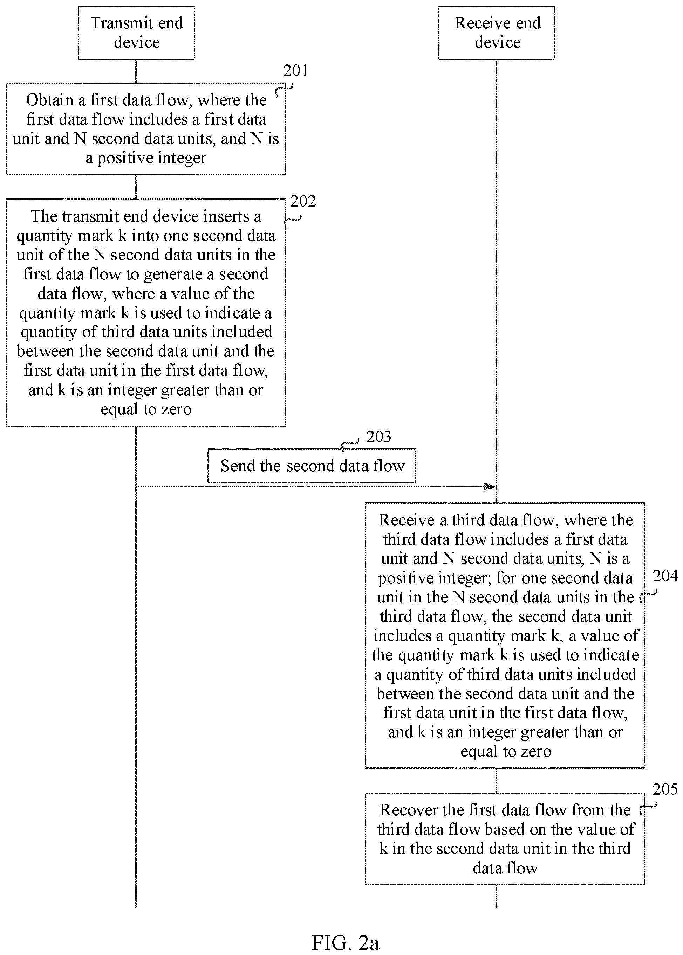

To resolve a problem that information about a clock frequency and a clock phase of the service is lost due to the foregoing data unit addition or deletion, in other words, to implement transparent transmission of the information about the clock frequency and the clock phase of the service, FIG. 2a is a schematic flowchart of a communication method according to an embodiment of this application. As shown in FIG. 2a, the method includes the following steps.

Step 201: A transmit end device obtains a first data flow, where the first data flow includes a first data unit and N second data units.

Step 202: The transmit end device inserts a number mark k into one second data unit of the N second data units in the first data flow to generate a second data flow, where the number mark k is used to indicate a quantity of third data units included between the second data unit and the first data unit in the first data flow, and k is an integer greater than or equal to zero.

In embodiments of this application, N may be 1. In this case, the first data flow in embodiments of this application includes one second data unit that carries a value of k. Alternatively, in embodiments of this application, N may be an integer greater than 1. In this case, the first data flow includes at least two second data units that carry a value of k.

Step 203: The transmit end device sends the second data flow.

Before the second data flow arrives at a receive end device, another device such as an intermediate device may perform idle unit addition or deletion, to adapt to a difference between rates on a line. In embodiments of this application, a data format of the second data flow may be the same as that of the first data flow, or may be different from that of the first data flow. For example, both the first data flow and the second data flow are encoded data flows. Alternatively, the first data flow is a data flow that has not been encoded, and the second data flow is an encoded data flow.

In embodiments of this application, the second data flow that reaches the receive end device is referred to as a third data flow. After step 203, the method further includes step 204.

Step 204: The receive end device receives a third data flow, where the third data flow includes a first data unit and N second data units, and N is a positive integer. For one second data unit of the N second data units in the third data flow, the second data unit includes a number mark k, the number mark k is used to indicate a quantity of third data units included between the second data unit and the first data unit in the first data flow, and k is an integer greater than or equal to 0.

Step 205: The receive end device recovers the first data flow from the third data flow based on the value of k in the second data unit in the third data flow.

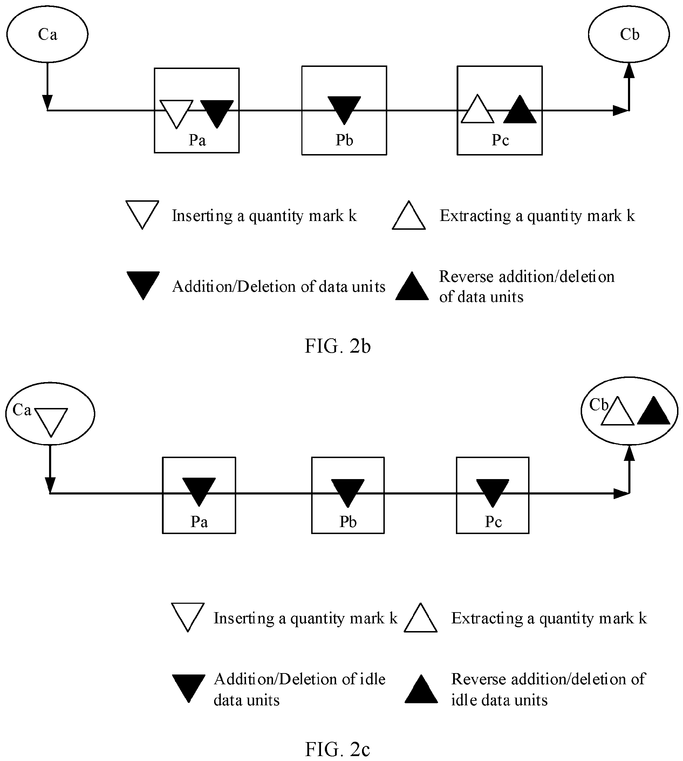

In embodiments of this application, the transmit end device may be a client device or may be a network device, and the receive end device may be a client device or may be a network device. FIG. 2b and FIG. 2c are schematic diagrams of two communication systems to which embodiments of this application are applicable. As shown in FIG. 2b and FIG. 2c, description is provided by using an example in which a client device Ca needs to send a service to a client device Cb. Reversely, when the client device Cb needs to send a service to the client device Ca, the situation is similar to that in FIG. 2b and FIG. 2c. Details are not described again.

An example in which networks shown in FIG. 2b and FIG. 2c are metro transmission networks is used for description. When the client device Ca sends a service to the client device Cb, an operation of inserting a number mark k into a first data flow in embodiments of this application may be performed at the client device Ca. In this case, the transmit end device is the client device Ca. In this embodiment of this application, the operation of inserting a number mark k into a first data flow may alternatively be performed at a network device Pa. In this case, the transmit end device is the network device Pa. An operation of extracting the number mark k may be performed at the client device Cb. In this case, the receive end device is the client device Cb. The operation of extracting the number mark k may alternatively be performed at a network device Pc. In this case, the receive end device is the network device Pc.

As shown in FIG. 2b, the client device Ca sends the first data flow to the network device Pa. The network device Pa inserts the number mark k into the first data flow to obtain a second data flow. Either of the network device Pa and a network device Pb may add or delete a data unit of the second data flow. For example, an idle data unit is added or deleted based on a value of a frequency offset, or no data unit of the second data flow is added or deleted. This is not limited. In FIG. 2b, an example in which both the network device Pa and the network device Pb add or delete a data unit of the second data flow is used. As shown in FIG. 2b, after processing is performed by the network device Pa and the network device Pb, a data flow received by the network device Pc is referred to as a third data flow. For the third data flow, the network device Pc may extract a value of k from the third data flow, to recover the first data flow from the third data flow and send the third data flow to the client device Cb. The metro transmission network devices Pa and Pb may perform an idle data unit addition or deletion process that is the same as the process in the conventional technology without any improvement, so that the technical solutions in this application are well compatible with the existing metro transmission network.

As shown in FIG. 2c, the client device Ca inserts the number mark k into the first data flow to obtain the second data flow, and the client device Ca sends the second data flow. Any one of the network device Pa, the network device Pb, and the network device Pc may add or delete a data unit of the second data flow. For example, an idle data unit is added or deleted based on a value of a frequency offset, or no data unit of the second data flow is added or deleted. This is not limited. In FIG. 2c, an example in which all of the network device Pa, the network device Pb, and the network device Pc add or delete a data unit of the second data flow is used. As shown in FIG. 2c, after processing is performed by the network device Pa, the network device Pb, and the network device Pc, a data flow received by the client device Cb is referred to as a third data flow. For the third data flow, the client device Cb may extract a value of k from the third data flow, to recover the first data flow from the third data flow. The metro transmission network devices Pa, Pb, and Pc may perform an idle data unit addition or deletion that is the same as the process in the conventional technology without any improvement, so that the technical solutions in this application are well compatible with the existing metro transmission network.

In this embodiment of this application, FIG. 2b and FIG. 2c illustrate two cases. There are other cases. For example, the operation of inserting the number mark k may be processed at the client device Ca, and the operation of extracting the number mark k may be processed at the network device Pc. For another example, the operation of inserting the number mark k may be processed at the network device Pa, and the operation of extracting the number mark k may be processed at the client device Cb. These cases are similar to the foregoing content and are not described one by one in detail.

In embodiments of this application, the data unit refers to a specific quantity of bits in a data flow, and may refer to bits before encoding or bits after encoding. A data unit in an encoded data flow is also referred to as a block. The foregoing descriptions about the data unit are applicable to definitions of any data unit of the first data unit, the second data unit, and the third data unit in embodiments of this application. In embodiments of this application, "first", "second", and "third" are merely used for distinguishing, and do not constitute a limitation, for example, the first data unit, the second data unit, and the third data unit, and for another example, the first data flow, the second data flow, and the third data flow.

For ease of understanding of subsequent content, in some parts of embodiments of this application, the first data unit is referred to as a reference data unit. In embodiments of this application, one or more reference data units may be set in the first data flow. In an optional implementation, one reference data unit may be set for one service flow. For example, a start data unit of a first packet of the service flow may be set to the reference data unit. Alternatively, a data unit at a location or at a time point before the first packet of the service flow is sent may be selected as the reference data unit.

There are many types of reference data units that can be selected. For example, the reference data unit may be a header block (which is also referred to as an S block) or a preset block (for example, a preset O block). In embodiments of this application, the reference data unit may be determined through negotiation between the transmit end device and the receive end device, or may be determined according to a preset rule.

For the second data unit, there are a plurality of implementations. In a first implementation, in this embodiment of this application, the one second data unit of the N second data units in the second data flow includes a start data unit. The start data unit may be a header block. The second data flow includes a plurality of start data units. A value of k may be inserted into each start data unit, or a value of k may be inserted into each of some start data units in the second data flow. For example, a value of k may be inserted at an interval of two or three start data units.

In a second implementation, in this embodiment of this application, the one second data unit of the N second data units in the second data flow includes a first preset data unit. The first preset data unit may be an O block or another block. The second data flow includes a plurality of first preset data units. A value of k may be inserted into each first preset data unit, or a value of k may be inserted into each of some first preset data units in the second data flow. For example, a value of k may be inserted at an interval of two or three first preset data units.

In a third implementation, in this embodiment of this application, the one second data unit of the N second data units in the second data flow includes a start data unit and a first preset data unit. The second data flow includes a plurality of first preset data units and a plurality of start data units. A value of k may be inserted into each start data unit and each first preset data unit, or a value of k may be inserted into each of some start data units and some first preset data units in the second data flow. For example, a value of k may be inserted at an interval of two or three first preset data units.

In this embodiment of this application, for the second data unit with the number mark k in the second data flow, the number mark k is used to indicate the quantity of third data units included between the second data unit and the first data unit in the first data flow. In other words, the value of k is a value that can indicate the quantity of third data units included between the second data unit and the reference data unit in the first data flow. For example, the value of k may be equal to the quantity of third data units included between the second data unit and the reference data unit in the first data flow. For another example, the value of k may be equal to a result obtained by performing a preset operation on a preset value and the quantity of third data units included between the second data unit and the reference data unit. For example, the value of k may be equal to a result obtained by performing a modulo operation on a first threshold and the quantity of third data units included between the second data unit and the reference data unit in the first data flow. For another example, the value of k may be a difference between the quantity of third data units included between the second data unit and the first data unit and p first thresholds, where p is a positive integer. In other words, a specific value of k may have various forms, provided that the value of k can indicate the quantity of third data units included between the second data unit and the first data unit.

In an optional implementation, for the one second data unit of the N second data units in the second data flow, when the quantity of third data units included between the second data unit and the first data unit is less than the first threshold, the value of k is the quantity of third data units included between the second data unit and the first data unit. When the quantity of third data units included between the second data unit and the first data unit is not less than the first threshold, the value of k is a value obtained by performing a modulo operation on the first threshold and the quantity of third data units included between the second data unit and the first data unit. Alternatively, it may be understood as that the third data units in the first data flow are counted, and each time a count reaches the first threshold, the count is set to zero, and the counting restarts from zero.

For step 202, that the transmit end device inserts a number mark k into one second data unit of the N second data units in the first data flow to generate a second data flow includes: The transmit end device counts, starting from the first data unit, the third data units in the first data flow, to obtain a first count. In an optional implementation, the third data units in the first data flow can be counted by using a first counter, and a value of the first count is obtained based on a value of the first counter. The number mark k is inserted into the one second data unit of the N second data units in the first data flow based on the first count corresponding to the second data unit, to generate the second data flow, where the first count corresponding to the second data unit is used to indicate the quantity of third data units included between the second data unit and the first data unit. In an optional implementation, after the transmit end device counts, starting from the first data unit, the third data units in the first data flow to obtain the first count, the method further includes: when a value of the first count reaches the first threshold, setting the value of the first count to zero.

In this embodiment of this application, for the one second data unit of the N second data units in the first data flow, the first count corresponding to the second data unit is used to indicate the quantity of third data units included between the second data unit and the first data unit in the first data flow. In another optional implementation, it may alternatively be described as follows: For the one second data unit of the N second data units in the first data flow, the value of the first count corresponding to the second data unit is used to indicate the quantity of third data units included between the second data unit and the first data unit in the first data flow. In other words, the first count corresponding to the second data unit or the value of the first count is information that can indicate the quantity of third data units included between the second data unit and the reference data unit in the first data flow. For example, the value of the first count corresponding to the second data unit may be equal to a total quantity of third data units included between the second data unit and the reference data unit in the first data flow. For another example, the value of the first count corresponding to the second data unit may be equal to a result obtained by performing a preset operation on a preset value and the quantity of third data units included between the second data unit and the reference data unit. For example, the value of the first count corresponding to the second data unit may be equal to a result obtained by performing a modulo operation on the first threshold and the total quantity of third data units included between the second data unit and the reference data unit in the first data flow. For another example, the value of the first count corresponding to the second data unit may be a difference between the total quantity of third data units included between the second data unit and the first data unit and p first thresholds, where p is a positive integer. In other words, the value of the first count corresponding to the second data unit may have various forms, provided that the first count corresponding to the second data unit can indicate the quantity of third data units included between the second data unit and the first data unit. It may alternatively be described as that the value of the first count corresponding to the second data unit can indicate the quantity of third data units included between the second data unit and the first data unit.

In an optional implementation, for the one second data unit of the N second data units in the second data flow, when the quantity of third data units included between the second data unit and the first data unit is less than the first threshold, the value of the first count corresponding to the second data unit is the quantity of third data units included between the second data unit and the first data unit. When the quantity of third data units included between the second data unit and the first data unit is not less than the first threshold, the value of the first count corresponding to the second data unit is a value obtained by performing a modulo operation on the first threshold and the quantity of third data units included between the second data unit and the first data unit.

In an optional implementation, the transmit end device counts, starting from the reference data unit, data units in the first data flow by using the first counter. A value of the first counter is the value of the first count. Each time the value of the first counter reaches the first threshold, the value of the first counter is set to zero for one time. After the value of the first counter is set to zero, the counting restarts from zero. This process is repeated.

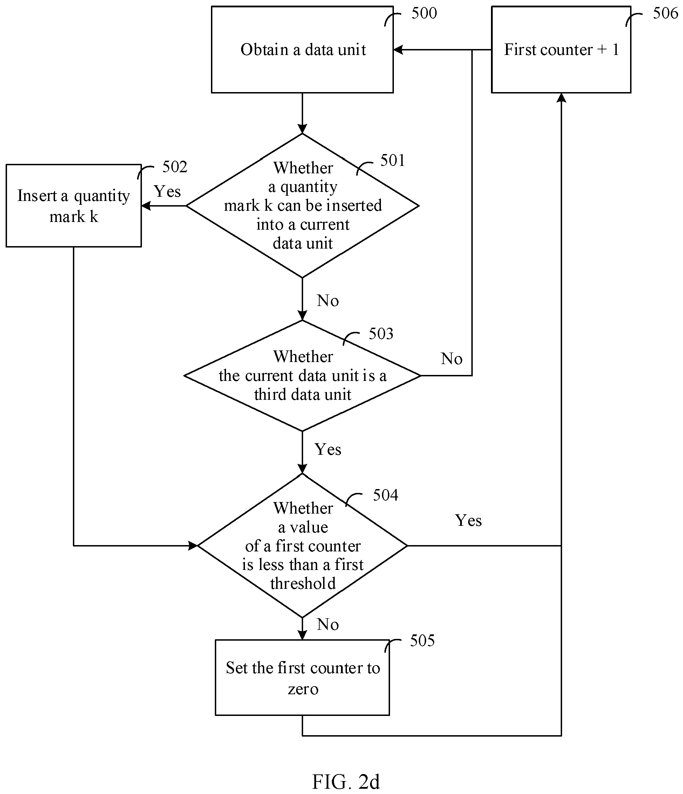

FIG. 2d is a schematic flowchart of an example of a communication method according to an embodiment of this application. As shown in FIG. 2d, the method includes the following steps.

Step 500: A transmit end device obtains a data unit in a first data flow.

The first data flow obtained in step 500 in this embodiment of this application may be one data flow of a service. When service execution ends, to be specific, when no data unit is sent, in other words, when a data unit in the first data flow cannot be obtained, the procedure ends.

Step 501: Determine whether a number mark k can be inserted into a current obtained data unit.

To be specific, this step is to determine whether the current data unit is a second data unit.

If a number mark k can be inserted into the current data unit, step 502 is performed; or if a number mark k cannot be inserted into the current data unit, step 503 is performed.

Step 503: Determine whether the current data unit is a third data unit.

In other words, whether a first counter needs to count the current data unit is determined.

If it is determined that the current data unit is a third data unit, step 504 is performed; or if the current data unit is not a third data unit, step 500 is repeatedly performed to obtain a data unit in the first data flow.

Step 504: Determine whether a value of the first counter is less than a first threshold.

If the value is not less than the first threshold, step 505 is performed; or if the value is less than the first threshold, step 506 is performed.

Step 505: Set the value of the first counter to zero, and then perform step 506.

Step 506: Increase the value of the first counter by 1.

After step 506, step 500 is repeatedly performed until all data units in the first data flow in step 500 are obtained and no data unit can be obtained any more, and the method procedure ends.

With reference to the example shown in FIG. 2d, it can be learned that for one data unit in a second data flow, when the data unit is a second data unit, a current value of the first counter may be a value of a first count corresponding to the data unit.

In an example, third data units are all data units included between the second data unit and a reference data unit, and the second data unit is a start data unit in the first data flow. In this case, the first counter is started, and the data units in the first data flow in this embodiment of this application are counted starting from the reference data unit to obtain the first count; and when the obtained data unit is a start data unit, a current value of the first count is inserted into the current start data unit. In an optional implementation, the foregoing process may alternatively be described as inserting the value of the first count corresponding to the second data unit as a value of k into the second data unit. Optionally, in the process of counting the data units by using the first counter, if the value of the first counter reaches the first threshold, the value of the first counter is set to zero, and the counting restarts from zero.

There are a plurality of manners for selecting the first threshold. Table 1 is a relationship table between a quantity of bits in a field occupied by a value of k and a quantity of blocks represented by the value of k. As shown in the first row of Table 1, when the quantity of bits (bits) occupied by the field of the number mark k is 8 (namely, 1 byte (Byte)), a maximum quantity of data units that can be represented by the value of k is 255. In this case, a number not greater than 255 may be selected for the first threshold. As shown in the second row of Table 1, when the quantity of bits occupied by the field of the number mark k is 16 (namely, 2 bytes), a maximum quantity of data units that can be represented by the value of k is 65535. In this case, a number not greater than 65535 may be selected for the first threshold.

**Table 1 Relationship table between a quantity of bits in a field occupied by a value of k and a quantity of blocks represented by the value of k**

| Quantity of bits occupied by a value of k | Quantity of blocks that can be represented by the value of k |
|---|---|
| 8 (1 byte) | 0 to 255 |
| 16 (2 bytes) | 0 to 65535 |
| 24 (3 bytes) | 0 to 16777215 |
| 32 (4 bytes) | 0 to 4294967295 |

In step 202, in this embodiment of this application, the third data units included between the one second data unit of the N second data units and the first data unit in the first data flow may include all the data units between the second data unit and the first data unit in the first data flow.

In another optional implementation, the third data units may include an idle data unit and/or a second preset data unit between the second data unit and the first data unit in the first data flow.

In a third optional implementation, the third data units may include a data unit included in an IPG in the first data flow, and the IPG may include an idle data unit and/or a second preset data unit. In this case, only the data unit included in the IPG can be counted. In this case, a data unit deleted by the transmit end device and/or an intermediate device can only be a data unit included in the IPG. In addition, if the transmit end device and/or the intermediate device need/needs to add a data unit to the second data flow, the transmit end device and/or the intermediate device can only add the data unit to the IPG. Therefore, only the data unit included in the IPG can be counted, or it may be described as that the third data units include all the data units in the IPG.

It can be learned from the foregoing content that, in this embodiment of this application, the transmit end device may insert the number mark k into the first data flow, to obtain the second data flow. The number mark k is used to indicate the quantity of third data units included between the second data unit and the first data unit in the first data flow. The second data flow is transmitted to a receive end device via an intermediate device, and the intermediate device may add or delete a data unit in the transmission process. The receive end device extracts the value of k from the received data flow, and performs reverse addition or deletion of data units to recover the first data flow. In this embodiment of this application, the reverse addition or deletion of data units specifically means that when n idle data units are added to the first data flow, the receive end device deletes n idle data units; or when n idle data units are deleted from the first data flow (or n idle data units and second preset data units are deleted), the receive end device adds n idle data units. In other words, the first data flow recovered by the receive end device and the first data flow before addition or deletion of data units are performed have a same quantity of data units. Therefore, the receive end device can obtain information about a clock frequency and a clock phase of the first data flow based on the recovered first data flow. This implements transparent transmission of information about a clock frequency and a clock phase of a service.

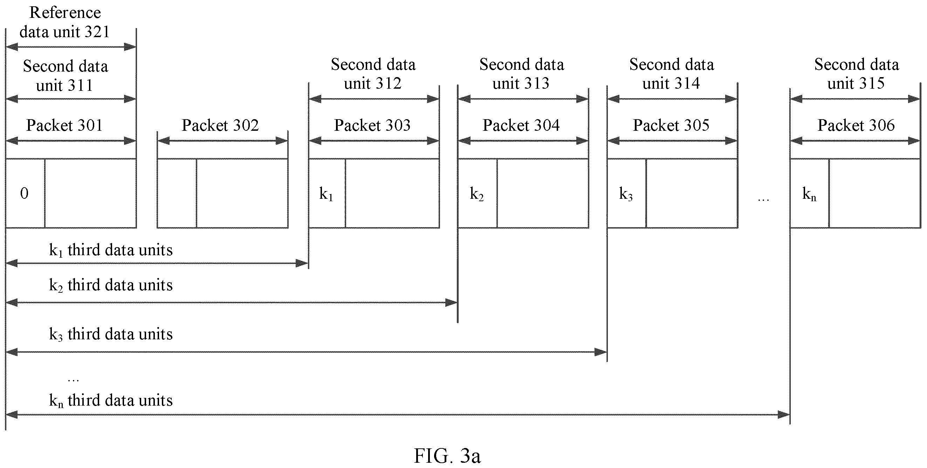

FIG. 3a is a schematic diagram of a structure of a second data flow according to an embodiment of this application. As shown in FIG. 3a, the second data flow includes a packet 301, a packet 302, a packet 303, a packet 304, a packet 305, a packet 306, and the like. If the packet 301 is the first packet in the service flow, in this example, the packet 301 is selected as a reference data unit 321. A value of k may be inserted into each of the packets; or a part of the packets may be selected, and a value of k may be inserted into each of the part of the packets. In this embodiment of this application, a data unit into which a value of k is inserted is referred to as a second data unit. The reference data unit 321 may serve as a second data unit 311, or may not serve as a second data unit. In other words, a value of k may or may not be inserted into the reference data unit. If the value of k is inserted into the reference data unit 321, the value of k is 0. The value of k inserted into a second data unit 312 is k₁, and may indicate that a quantity of third data units included between the second data unit 312 and the reference data unit 321 is k₁, or may indicate that a result obtained by performing a preset operation on a preset value and a quantity of third data units included between the second data unit 312 and the reference data unit 321 is k₁. A value of k inserted into a second data unit 313 is k₂. A value of k inserted into a second data unit 314 is k₃. A value of k inserted into a second data unit 315 is kₙ.

It should be noted that for one second data unit of N second data units in the second data flow, in this embodiment of this application, an interval exists between the second data unit and the reference data unit, and the second data unit and the reference data unit are two endpoints of the interval. In an optional implementation, the interval is a half-open interval, that is, the interval includes one endpoint. For example, the half-open interval includes an endpoint, that is, the reference data unit. For another example, the half-open interval includes an endpoint, that is, the second data unit. In this embodiment of this application, for ease of description, an example in which the half-open interval includes the endpoint, that is, the reference data unit is used for description. In other words, in this embodiment of this application, for the one second data unit of the N second data units in the second data flow, the half-open interval including the endpoint, that is, the reference data unit specifically exists between the second data unit and the reference data unit. To avoid redundant description, details are not described in other parts.

The example in which the half-open interval includes the endpoint, that is, the reference data unit is used for description. In this case, the example is provided with reference to FIG. 3a. For example, the value of k inserted into the second data unit 312 is k₁, and may indicate that the quantity of third data units (including the reference data unit 321) included between the second data unit 312 and the reference data unit 321 is k₁, or may indicate that the result obtained by performing the preset operation on the preset value is k₁ and the quantity of third data units (including the reference data unit 321) included between the second data unit 312 and the reference data unit 321.

In an optional implementation, a data unit set to the reference data unit is also a third data unit. For example, when the third data units are all the data units between the second data unit and the first data unit, as described above, for the one second data unit of the N second data units in the second data flow, the half-open interval including the endpoint, what is, the reference data unit exists between the second data unit and the reference data unit. In this case, the data unit set to the reference data unit is also a third data unit. For another example, when the third data units are second preset data units between the second data unit and the first data unit, as described above, for the one second data unit of the N second data units in the second data flow, in this embodiment of this application, the half-open interval including the endpoint, that is, the reference data unit exists between the second data unit and the reference data unit, and the data unit set to the reference data unit is a second preset data unit. In this case, the data unit set to the reference data unit is also a third data unit. If the data unit set to the reference data unit is not a second preset data unit, the data unit set to the reference data unit is not a third data unit.

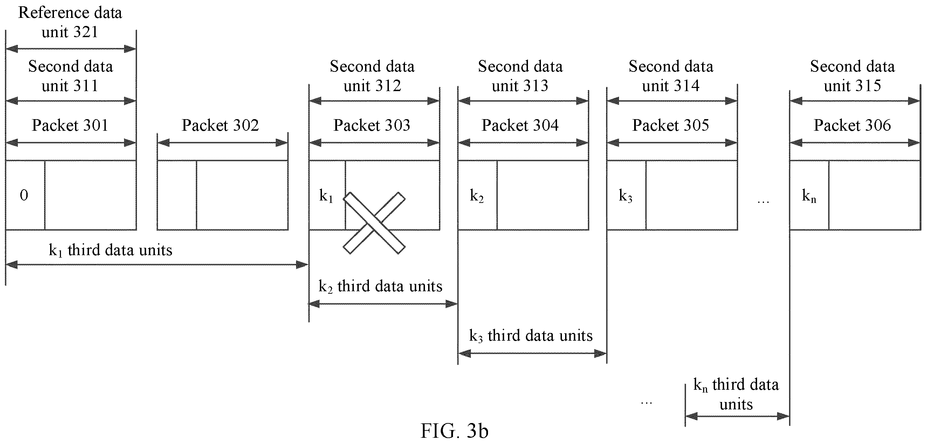

FIG. 3b shows another possible solution based on FIG. 3a. As shown in FIG. 3b, if a value of k carried in a second data unit is used to indicate a quantity of third data units included between the second data unit and a second data unit adjacent to the second data unit, in this solution, signal recovery performed by the receive end device needs to rely on relative values of quantities of data units included between adjacent second data units, in other words, signal recovery greatly depends on received values of k. When a single point of failure occurs, that is, an error occurs in one second data unit (for example, the packet 303) of all Ethernet packets of a service, frequency information of the entire service cannot be recovered. In this solution provided in this embodiment of this application, as shown in FIG. 3a, the value of k in the second data unit can indicate the quantity of third data units between the second data unit and the reference data unit. In this case, if a single point of failure occurs (for example, the packet 303 is lost), recovery of time and frequency information that correspond to another packet (for example, the packet 304) is not affected.

As shown in FIG. 3a, in an optional implementation, if packets of service data are packets between the reference data unit 321 and the packet 306, in other words, a previous packet of the packet 306 is the last packet of the service data, a value of kₙ may be transmitted by using an independent data unit, or a value of kₙ may be transmitted by using an idle bit in a data unit that carries other information. It may alternatively be described as that a second data unit carrying the value of kₙ may carry only the value of kₙ, or may carry other information in addition to the value of kₙ, for example, other operation and maintenance management control information. In other words, the second data unit carrying the value of kₙ may be a data unit that is set independently (for example, the second data unit carrying the value of kₙ may be a start data unit), or may be another data unit for transmitting operation and maintenance management control information (for example, the second data unit carrying the value of kₙ may be a first preset data unit). There are a plurality of specific implementations. This is not specifically limited in this embodiment of this application.

Another implementation may be further provided in this embodiment of this application. The transmit end device inserts a number mark k into one second data unit of the N second data units in the first data flow to generate a second data flow, where the number mark k is used to indicate a quantity of third data units included between a preset second data unit corresponding to the second data unit and the first data unit in the first data flow. Specifically, the preset second data unit corresponding to the second data unit may be the second data unit, or may be a second data unit included between the second data unit and the reference data unit. For example, the preset second data unit corresponding to the second data unit is a previous second data unit of the second data unit. If this embodiment is applied to FIG. 3a, k₂ carried in the second data unit 313 in FIG. 3a is a quantity of third data units (including the reference data unit 321) between the second data unit 312 and the reference data unit 321. k₃ carried in the second data unit 314 in FIG. 3a is a quantity of third data units between the second data unit 313 and the reference data unit 321. In other words, this embodiment of this application may further provide another implementation solution. In this implementation solution, a value of k is not limited to indicating a quantity of third data units included between a second data unit that carries the value of k and the reference data unit, or may indicate a quantity of third data units included between another second data unit and the reference data unit in the data flow. For this implementation, after receiving a value of k carried in a second data unit, the receive end device performs, according to a corresponding rule, reverse addition or deletion of data units on the received third data flow, to recover the first data flow.

In step 201, all the N second data units in the second data flow may include first indication information. For one second data unit that is of the N second data units in the second data flow and that includes the first indication information, the first indication information is used to indicate that there is a number mark k in the second data unit. Alternatively, the first indication information may not be configured in any of the N second data units. Optionally, some second data units of the N second data units may include the first indication information, and some second data units may not include the first indication information. In specific implementation, the first indication information may be new content in the second data unit, or may reuse information carried in the second data unit. For example, the second data units are all start data units in the second data flow, and a field in a start data unit that can indicate that the data unit is a start data unit is the first indication information. In other words, the field in the start data unit that can indicate that the data unit is a start data unit also indicates that there is a number mark k in the data unit.

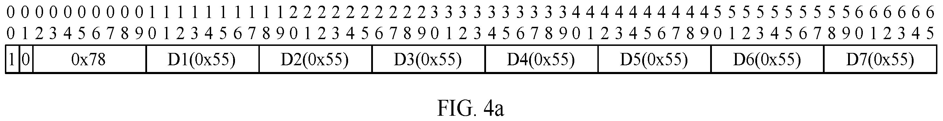

An example in which the second data units are start data units is used for description. If a start data unit is encoded, the start data unit may also be referred to as a start block. Because a start block S in an Ethernet (including a metro transmission network) data frame is a block with a fixed bit pattern, and is not changed in a transmission process, the start block S includes redundant information, and can be used to carry information such as the number mark k. For example, on a media independent interface (Media Independent Interface, MII), a preamble element includes 8-byte transmit (character) data (Transmit (character) Data, TXD) or received (character) data (Received (character) Data, RXD), and is indicated by using 8-bit transmit (character) control (signals) (Transmit (character) Control (signals), TXC) or received (character) control (signals) (Received (character) Control (signals), RXC). For example, <TXC,TXD> of the preamble element is as follows: <1,0xFB> <0,0x55> <0,0x55> <0,0x55> <0,0x55> <0,0x55> <0,0x55> <0,0xD5>. 0xFB is a start-of-frame control character "/S/". 0xD5 is a start-of-frame delimiter (Start of Frame Delimiter, SFD). A preamble element in a data format obtained after coding is referred to as a start block. A boundary of an 8-byte preamble element is aligned with a boundary of a 64B/66B block. For example, "/S/" is aligned with a boundary of the start block. FIG. 4a shows a 64B/66B coding format of a start block according to an embodiment of this application. The start block includes a synchronization header "10" and a control block type "0x78".

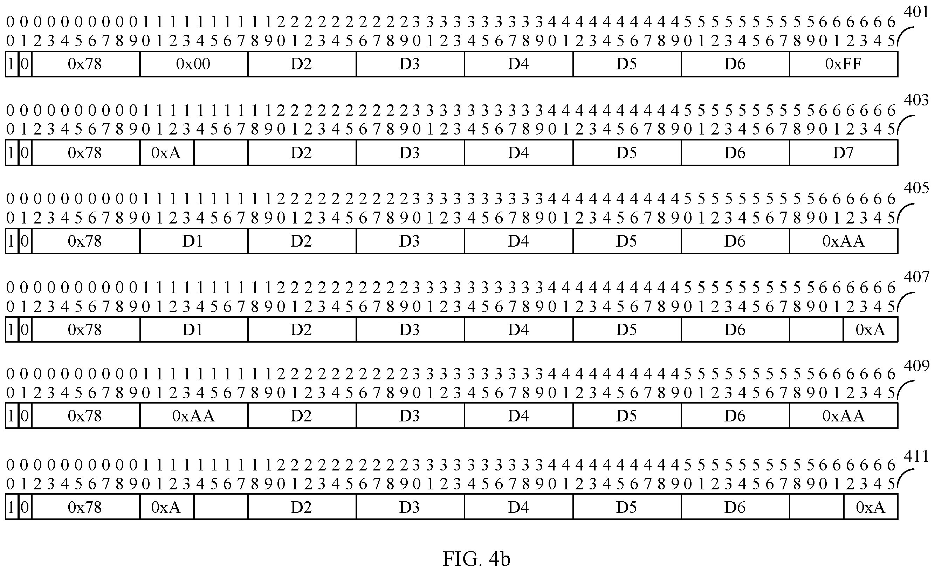

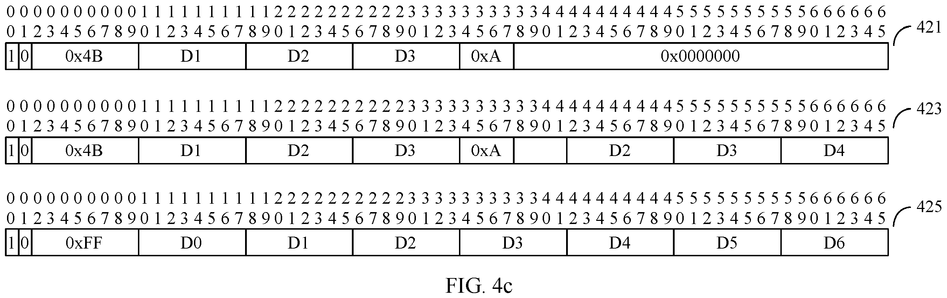

A number mark k is inserted into a start block, and the start block may be changed to a block identified by using a preset pattern. FIG. 4b is a schematic diagram of six block formats according to an embodiment of this application. For example, on the basis of the start block shown in FIG. 4a, for a block 401, "0x55" of D1 is changed to "0x00", and "0xD5" of D7 is changed to "0xFF". For a block 403, D1 is changed to "0xA". For a block 405, D7 is changed to "0xAA". For a block 407, D7 is changed to "0xA". For a block 409, D1 is changed to "0xAA", and D7 is changed to "0xAA". For a block 411, D1 is changed to "0xA", and D7 is changed to "0xA". D2, D3, D4, D5, and D6 in the six blocks may be used to carry the number mark k. Other block formats may alternatively be used. FIG. 4c is a schematic diagram of three block formats according to an embodiment of this application. Block formats of blocks 421 and 423 are identified by using a preset pattern "0x4B+0xA". For a block 425, a control block type "0x78" is changed to "0xFF". A specific implementation is not limited to the block formats shown in FIG. 4b and FIG. 4c, provided that a start block carrying k can be identified.

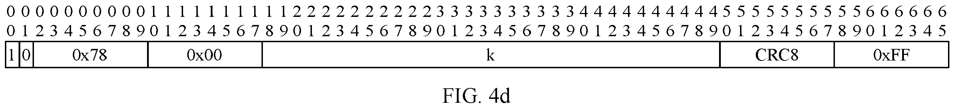

To ensure reliability of the number mark k, the number mark k may be further checked. FIG. 4d is a schematic diagram of one block format according to an embodiment of this application. A cyclic redundancy check (Cyclic Redundancy Check, CRC) check bit is set for the number mark k, for example, CRC8, so that the receive end device performs verification on transmission reliability.

A quantity mark may be inserted into each of start blocks or each of a part of start blocks in the first data flow. Inserting a number mark into a start block or an idle block is actually replacing the start block or the idle block with a block carrying the quantity mark. The start block or the idle block may be first changed to a block identified by using a preset pattern, and then, the number mark is inserted into the block identified by using the preset pattern. Alternatively, the number mark is first inserted into the start block or the idle block, and then, the start block or the idle block into which the number mark is inserted is changed to a block identified by using a preset pattern. Alternatively, a block that is identified by using a preset pattern and that carries the number mark is directly inserted into a location of the start block or the idle block. This is not limited in this application.

In step 205, that the receive end device recovers the first data flow from the third data flow based on the value of k in the second data unit in the third data flow includes: The receive end device determines a value of m corresponding to the one second data unit of the N second data units in the third data flow, where m corresponding to the one second data unit is used to indicate a quantity of third data units included between the second data unit and the first data unit in the third data flow, and m is an integer greater than or equal to zero. The receive end device recovers the first data flow from the third data flow based on the value of m corresponding to the one second data unit of the N second data units in the third data flow and the value of k in the one second data unit of the N second data units in the third data flow.

In this embodiment of this application, for a value of m corresponding to a second data unit in the third data flow, m corresponding to one second data unit is used to indicate a quantity of third data units included between the second data unit and the first data unit in the third data flow. In other words, the value of m is a value that can indicate the quantity of third data units included between the second data unit and the reference data unit in the third data flow. For example, the value of m may be equal to the quantity of third data units included between the second data unit and the reference data unit in the third data flow. For another example, the value of m may alternatively be equal to a result obtained by performing a modulo operation on a preset value and the quantity of third data units included between the second data unit and the reference data unit in the third data flow. For example, the value of m may be equal to a result obtained by performing a modulo operation on the first threshold and the quantity of third data units included between the second data unit and the reference data unit in the third data flow. For another example, the value of m may be equal to a result obtained by performing a preset operation on a preset value and the quantity of third data units included between the second data unit and the reference data unit in the third data flow. In other words, a specific value of m may have various forms, provided that the value of m can indicate the quantity of third data units included between the second data unit and the first data unit.

In an optional implementation, for the one second data unit of the N second data units in the third data flow: when the quantity of third data units included between the second data unit and the first data unit in the third data flow is less than the first threshold, the value of m is the quantity of third data units included between the second data unit and the first data unit; or when the quantity of third data units included between the second data unit and the first data unit in the third data flow is not less than the first threshold, the value of m is a value obtained by performing a modulo operation on the first threshold and the quantity of third data units included between the second data unit and the first data unit in the third data flow. In another optional implementation, it may alternatively be described as that the value of m is a difference between the quantity of third data units included between the second data unit and the first data unit in the third data flow and q first thresholds, where q is a positive integer. Alternatively, it may be understood as that the third data units in the third data flow are counted, and each time a count reaches the first threshold, the count is set to zero, and the counting restarts from zero.

For a definition and description of the third data unit in the third data flow, refer to the foregoing definition and description of the third data unit in the first data flow or the second data flow. For example, the third data units included between the one second data unit of the N second data units and the first data unit in the third data flow include an idle data unit and/or a second preset data unit between the second data unit and the first data unit in the third data flow. For another example, the third data units included between the one second data unit of the N second data units and the first data unit in the third data flow include all data units between the second data unit and the first data unit in the third data flow. Details are not described herein.

In this embodiment of this application, that the receive end device determines a value of m corresponding to the one second data unit of the N second data units in the third data flow includes: The receive end device counts, starting from the first data unit in the third data flow, the third data units in the third data flow, to obtain a second count. In an optional implementation, the third data units in the third data flow can be counted by using a second counter, and a value of the second count is determined based on a value of the second counter. The value of m corresponding to the one second data unit of the N second data units in the third data flow is determined based on the second count corresponding to the second data unit. The second count corresponding to the second data unit is used to indicate the quantity of third data units included between the second data unit and the first data unit in the third data flow. After the receive end device counts, starting from the first data unit in the third data flow, the third data units in the third data flow to obtain the second count, the method further includes: when the value of the second count reaches the first threshold, setting the value of the second count to zero.

In this embodiment of this application, for the one second data unit of the N second data units in the third data flow, the second count corresponding to the second data unit is used to indicate the quantity of third data units included between the second data unit and the first data unit in the third data flow. In another optional implementation, it may alternatively be described as that the value of the second count corresponding to the second data unit is used to indicate the quantity of third data units included between the second data unit and the first data unit in the third data flow. In other words, in this embodiment of this application, the receive end device counts the third data units in the received third data flow. In this embodiment of this application, for the one second data unit of the N second data units in the third data flow, the value of the second count corresponding to the second data unit can indicate a value of the quantity of third data units included between the second data unit data and the reference data unit in the third data flow. For example, the value of the second count corresponding to the second data unit may be equal to the quantity of third data units included between the second data unit and the reference data unit in the third data flow. For another example, the value of the second count corresponding to the second data unit may be equal to a result obtained by performing a preset operation on a preset value and the quantity of third data units included between the second data unit and the reference data unit. For example, the value of the second count corresponding to the second data unit may be equal to a result obtained by performing a modulo operation on the first threshold and the quantity of third data units included between the second data unit and the reference data unit in the third data flow. For another example, the value of the second count corresponding to the second data unit may be a difference between the quantity of third data units included between the second data unit and the first data unit and p first thresholds, where p is a positive integer. In other words, the value of the second count corresponding to the second data unit may have various forms, provided that the value of the second count corresponding to the second data unit can indicate the quantity of third data units included between the second data unit and the first data unit. It may alternatively be described as that the second count corresponding to the second data unit can indicate the quantity of third data units included between the second data unit and the first data unit.

In an optional implementation, for the one second data unit of the N second data units in the third data flow, when the quantity of third data units included between the second data unit and the first data unit is less than the first threshold, the value of the second count corresponding to the second data unit is the quantity of third data units included between the second data unit and the first data unit. When the quantity of third data units included between the second data unit and the first data unit is not less than the first threshold, the value of the second count corresponding to the second data unit is a value obtained by performing a modulo operation on the first threshold and the quantity of third data units included between the second data unit and the first data unit.

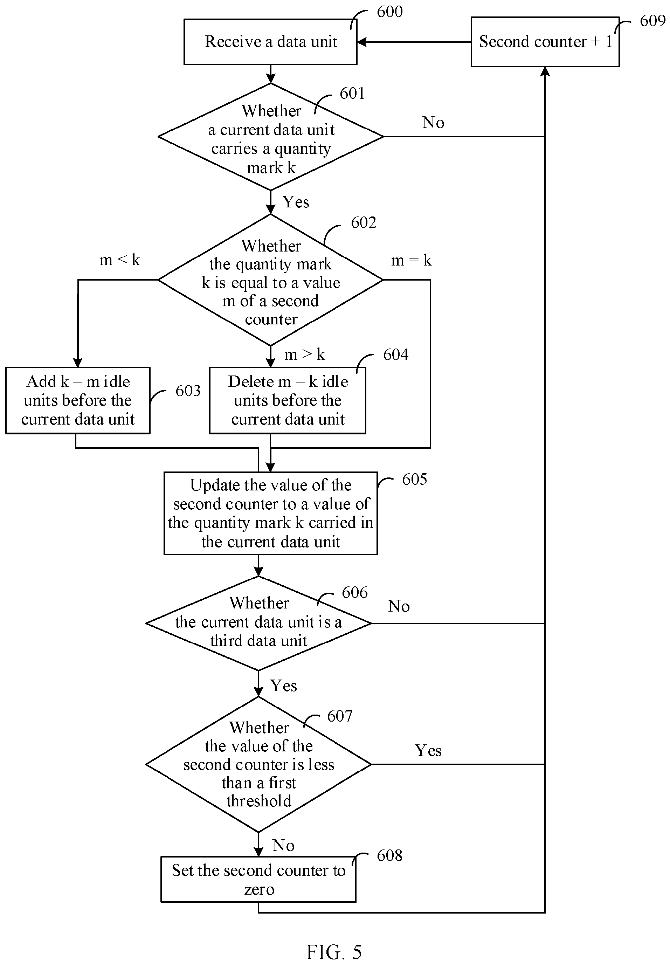

In an optional implementation, the receive end device counts, starting from the received reference data unit, data units in the third data flow by using the second counter. A value of the second counter is the value of the second count. Each time the value of the second counter reaches the first threshold, the value of the second counter is set to zero for one time. After the value of the second counter is set to zero, the counting restarts from zero. This process is repeated. In addition, each time after a second data unit carrying k is received and reverse addition or deletion is performed on received data units in the third data flow, a value of the second counter needs to be updated to a value of k. For a detailed example, refer to FIG. 5 below.

FIG. 5 is a schematic flowchart of an example of a communication method according to an embodiment of this application. As shown in FIG. 5, the method includes the following steps.

Step 600: A receive end device receives a data unit in a third data flow.

The third data flow obtained in step 600 in this embodiment of this application may be one data flow of a service. When service execution ends, to be specific, when no data unit is sent, in other words, when a data unit in the third data flow cannot be obtained, the procedure ends.

Step 601: Determine whether a number mark k is carried in a current obtained data unit.

To be specific, this step is to determine whether the current data unit is a second data unit.

If the number mark k is carried in the current data unit, step 602 is performed; or if the number mark k is not carried in the current data unit, step 608 is performed.

Step 602: Determine whether the current number mark k is equal to a value m of a second counter.

If m is less than k, step 603 is performed; if m = k, step 605 is performed; or if m is greater than k, step 604 is performed.

Step 603: Add k - m idle data units before the current data unit.

Step 604: Delete m - k idle data units before the current data unit.

Step 605: Update the value of the second counter to the value of the number mark k carried in the current data unit.

The step may alternatively be described as updating a value of a second count to a value of k in the second data unit.

Step 606: Determine whether the current data unit is a third data unit.

In other words, whether the second counter needs to count the current data unit is determined.

If it is determined that the current data unit is a third data unit, step 607 is performed; or if the current data unit is not a third data unit, step 600 is repeatedly performed to obtain a data unit in the third data flow.

Step 607: Determine whether the value of the second counter is less than a first threshold.

If the value is not less than the first threshold, step 608 is performed; or if the value is less than the first threshold, step 609 is performed.

Step 608: Set the value of the second counter to zero, and then perform step 609.

Step 609: Increase the value of the second counter by 1.

After step 609, step 600 is repeatedly performed until all data units in the third data flow in step 600 are obtained and no data unit can be obtained any more, and the method procedure ends.

With reference to the example shown in FIG. 5, it can be learned that for one data unit in the third data flow, when the data unit is a third data unit, a current value of the second counter may be a value of a second count corresponding to the data unit.

In an example, third data units are all data units included between the second data unit and a reference data unit, and the second data unit is a start data unit in a first data flow. In this case, the counter is started, and received data units in the third data flow in this embodiment of this application are counted starting from the reference data unit to obtain the second count; and when the obtained data unit is a start data unit, the number mark k in the start data unit is extracted and is compared with the current second count, to perform a reverse addition or deletion operation on data units, and the value of the second count is updated to a value of k, in other words, the value of the second counter is updated to the value of k. In this embodiment of this application, in a process of counting the data units by using the counter, if the value of the second counter reaches the first threshold, the value of the second counter is set to zero, and the counting restarts from zero.

In this embodiment of this application, one implementation for the reverse addition or deletion operation performed on the third data flow is provided in FIG. 5. During actual application, there may be a plurality of other reverse addition or deletion operations.

In a first possible implementation, for one second data unit of N second data units in the third data flow, when an absolute value of a difference between a value of m corresponding to the second data unit and a value of k in the second data unit is less than a second threshold: if the value of m corresponding to the second data unit is greater than the value of k in the second data unit, (m - k + correction value) idle data units between the second data unit and a first data unit in the third data flow are reduced; or if the value of m corresponding to the second data unit is less than the value of k in the second data unit, (k - m + correction value) idle data units are added between the second data unit and a first data unit in the third data flow.

In a second possible implementation, for one second data unit of N second data units in the third data flow, when an absolute value of a difference between a value of m corresponding to the second data unit and a value of k in the second data unit is not less than a second threshold: if the value of m corresponding to the second data unit is greater than the value of k in the second data unit, (k + first threshold - m + correction value) idle data units are added between the second data unit and a first data unit in the third data flow; or if the value of m corresponding to the second data unit is less than the value of k in the second data unit, (m + first threshold - k + correction value) idle data units between the second data unit and a first data unit in the third data flow are reduced.

In the foregoing second possible implementation, when the absolute value of the difference between the value of m corresponding to the second data unit and the value of k in the second data unit is not less than the second threshold, it indicates that a difference between m and k is at least one first threshold. Therefore, in this case, the first threshold needs to be added when subsequent reverse addition or deletion of data units is performed. In addition, in embodiments of this application, a quantity of data units added or deleted on a link is relatively limited in a data unit addition or deletion process. Therefore, in the solutions provided in embodiments of this application, the difference between m and k is at most one first threshold, and is not too large. Therefore, the solutions provided in embodiments of this application are feasible.

In the foregoing first possible implementation and second possible implementation, the correction value may be 0, +1, or -1. Certainly, the value may alternatively be -2, +2, or another value. For example, after obtaining the reference data unit, a transmit end device and the receive end device start to count the third data units, and end current counting when receiving a second data unit that carries a value of k. After a corresponding first data flow is recovered, a process of counting third data units between the first data unit and a next second data unit starts. In a first case, both the transmit end device and the receive end device count the second data unit as the third data unit. In other words, in terms of the second data unit and the third data unit, the data unit classified as the second data unit is also a third data unit, and also needs to be counted during counting. In this case, both the transmit end device and the receive end device count the second data unit as the third data unit. Therefore, the correction value is 0. In a second case, if the transmit end device counts the second data unit in the data flow as the third data unit, but the receive end device does not count the second data unit as the third data unit, the correction value is +1. In a third case, if the transmit end device does not count the second data unit as the third data unit, but the receive end device counts the second data unit as the third data unit, the correction value is -1 (the correction value may be adjusted for the receive end device).

In this embodiment of this application, when the correction value is 0, the following possible implementations may alternatively be provided in this embodiment of this application. In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is less than a second threshold: if the value of m corresponding to the second data unit is greater than the value of k in the second data unit, reducing (m - k) idle data units between the second data unit and the first data unit in the third data flow; or if the value of m corresponding to the second data unit is less than the value of k in the second data unit, adding (k - m) idle data units between the second data unit and the first data unit in the third data flow. In this way, reverse addition or deletion of data units in the third data flow can be performed based on the value of m and the value of k, to recover the first data flow.

In a possible implementation, that the receive end device recovers the first data flow from the third data flow based on the value of m corresponding to the one second data unit of the N second data units in the third data flow and the value of k in the one second data unit of the N second data units in the third data flow includes: for the one second data unit of the N second data units in the third data flow: when an absolute value of a difference between the value of m corresponding to the second data unit and the value of k in the second data unit is not less than a second threshold: if the value of m corresponding to the second data unit is greater than the value of k in the second data unit, adding (k + first threshold - m) idle data units between the second data unit and the first data unit in the third data flow; or if the value of m corresponding to the second data unit is less than the value of k in the second data unit, reducing (m + first threshold - k) idle data units between the second data unit and the first data unit in the third data flow. In this way, on one hand, reverse addition or deletion of data units in the third data flow can be performed based on the value of m and the value of k, to recover the first data flow. On the other hand, when the difference between m and k is relatively large, the first threshold is added for adjustment. This lays a foundation for specific operation details in an actual application scenario. In other words, in this embodiment of this application, when the correction value is 0, the correction value may be written or may not be written in the formula for a quantity of idle data units to be added or deleted.

The solutions provided in embodiments of this application can support transparent transmission of a frequency timing feature and a packet phase feature of a service, thereby greatly enhancing a service transparent transmission capability of FlexE/MTN, and improving precision of transparent transmission of clock and frequency information. Transparent transmission of frequency in the syncE, transparent transmission of a frequency and packet time and phase in the IEEE 1588, and transparent transmission of a frequency and packet phase in the IEEE 802.1AS require specified packets. These transmission manners are coarse-grained, while in embodiments of this application, bits in the second data unit may be used to carry the value of k (for example, an idle location in the start data unit is used to carry the value of k), and no additional bandwidth is required. Secondly, a statistical value (the number mark k) of a frequency timing feature and a packet phase feature of a client service may be transmitted in an idle location in a preamble or an S block, without occupying additional bandwidth of the client service. Thirdly, the solutions provided in embodiments of this application have good scalability, and may be applied to a plurality of scenarios in which transparent transmission of time and frequency information is needed. In addition, an implementation is flexible. The solutions provided in embodiments of this application not only can resolve a problem of a low-rate Ethernet port, but also can be applied to a high-rate Ethernet port.

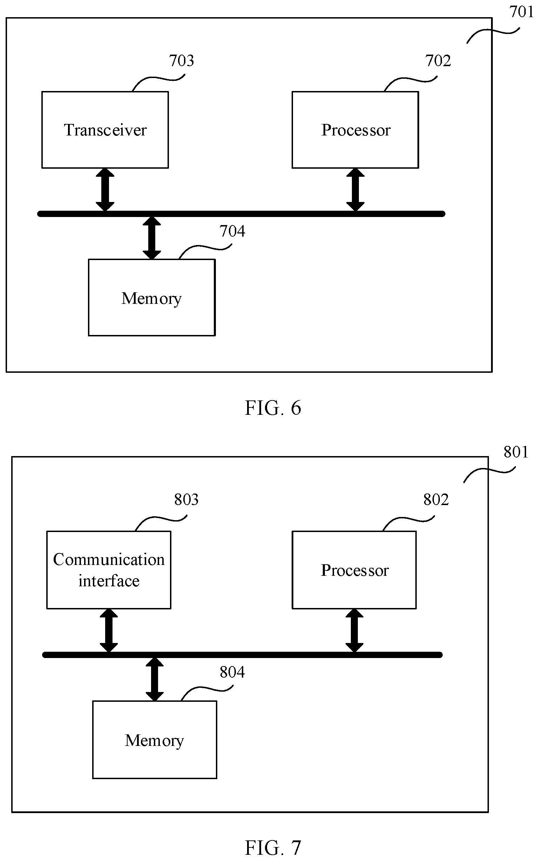

Based on the foregoing methods, FIG. 6 is a schematic diagram of a structure of a communication device according to an embodiment of this application. As shown in FIG. 6, the communication device may be a network device, or may be a chip or a circuit, for example, a chip or a circuit that may be disposed in a network device.

Further, the communication device 701 may further include a bus system. A processor 702, a memory 704, and a transceiver 703 may be connected through the bus system.

It should be understood that the processor 702 may be a chip. For example, the processor 702 may be a field programmable gate array (field programmable gate array, FPGA), an application-specific integrated circuit (application specific integrated circuit, ASIC), a system-on-a-chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps of the foregoing methods can be implemented by using a hardware integrated logic circuit in the processor 702, or by using instructions in a form of software. The steps of the methods disclosed with reference to embodiments of this application may be directly performed by a hardware processor, or may be performed by using a combination of hardware and a software module in the processor 702. The software module may be located in a mature storage medium in the art, such as a random access memory, a flash memory, a read-only memory, a programmable read-only memory, an electrically erasable programmable memory, or a register. The storage medium is located in the memory 704, and the processor 702 reads information in the memory 704 and completes the steps of the foregoing methods in combination with hardware of the processor.

It should be noted that, the processor 702 in embodiments of this application may be an integrated circuit chip, and has a signal processing capability. In an implementation process, steps of the foregoing method embodiments may be implemented by using an integrated logic circuit of hardware in the processor or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and logic block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory 704 in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. For example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the system and the method described in this specification is intended to include, but not limited to, these memories and any memory of another proper type.

The communication device 701 may be configured to perform the foregoing solutions of the transmit end device, or may be configured to perform the foregoing solutions of the receive end device. The communication device may include the processor 702, the transceiver 703, and the memory 704. The memory 704 is configured to store instructions. The processor 702 is configured to execute the instructions stored in the memory 704, to implement a related solution in the method corresponding to any one or more of FIG. 1 to FIG. 5.

When the communication device 701 is configured to perform the foregoing solutions of the transmit end device, the communication device 701 may be configured to perform the methods related to the transmit end device in FIG. 2a and FIG. 2d. When the communication device 701 is configured to perform the foregoing solutions of the receive end device, the communication device 701 may be configured to perform the methods related to the receive end device in FIG. 2a and FIG. 5.

In a first possible implementation, when the communication device 701 is configured to perform the foregoing solutions of the transmit end device, the processor 702 is configured to: obtain a first data flow, where the first data flow includes a first data unit and N second data units, and N is a positive integer; and insert a number mark k into one second data unit of the N second data units in the first data flow to generate a second data flow, where the number mark k is used to indicate a quantity of third data units included between the second data unit and the first data unit in the first data flow, and k is an integer greater than or equal to zero. The transceiver 703 is configured to send the second data flow.

In a first possible implementation, when the communication device 701 is configured to perform the foregoing solutions of the transmit end device, the processor 702 is specifically configured to: for the one second data unit of the N second data units in the first data flow, count, starting from the first data unit, the third data units in the first data flow, to obtain a first count; and insert the number mark k into the one second data unit of the N second data units in the first data flow based on the first count corresponding to the second data unit, to generate the second data flow, where the first count corresponding to the second data unit is used to indicate the quantity of third data units included between the second data unit and the first data unit in the first data flow.

In a first possible implementation, when the communication device 701 is configured to perform the foregoing solutions of the transmit end device, the processor 702 is further configured to: when a value of the first count reaches a first threshold, set the value of the first count to zero.

When the communication device 701 is configured to perform the foregoing solutions of the receive end device, in a first possible implementation, the transceiver 703 is configured to receive a third data flow, where the third data flow includes a first data unit and N second data units, N is a positive integer, one second data unit of the N second data units in the third data flow includes a number mark k, the number mark k is used to indicate a quantity of third data units included between the second data unit and the first data unit in a first data flow, and k is an integer greater than or equal to zero; and the processor 702 is configured to recover the first data flow from the third data flow based on a value of k in the second data unit in the third data flow.

In a second possible implementation, when the communication device 701 is configured to perform the foregoing solutions of the receive end device, the processor 702 is specifically configured to: determine a value of m corresponding to the one second data unit of the N second data units in the third data flow, where m corresponding to the one second data unit is used to indicate a quantity of third data units included between the second data unit and the first data unit in the third data flow, and m is an integer greater than or equal to zero; and recover the first data flow from the third data flow based on the value of m corresponding to the one second data unit of the N second data units in the third data flow and the value of k in the one second data unit of the N second data units in the third data flow.

In a third possible implementation, when the communication device 701 is configured to perform the foregoing solutions of the receive end device, the processor 702 is specifically configured to: for the one second data unit of the N second data units in the third data flow: when an absolute value of a difference between the value of m corresponding to the second data unit and the value of k in the second data unit is less than a second threshold: if the value of m corresponding to the second data unit is greater than the value of k in the second data unit, reduce (m - k + correction value) idle data units between the second data unit and the first data unit in the third data flow; or if the value of m corresponding to the second data unit is less than the value of k in the second data unit, add (k - m + correction value) idle data units between the second data unit and the first data unit in the third data flow.

In a fourth possible implementation, when the communication device 701 is configured to perform the foregoing solutions of the receive end device, the processor 702 is further configured to: when an absolute value of a difference between the value of m corresponding to the second data unit and the value of k in the second data unit is not less than a second threshold: if the value of m corresponding to the second data unit is greater than the value of k in the second data unit, add (k + first threshold - m + correction value) idle data units between the second data unit and the first data unit in the third data flow; or if the value of m corresponding to the second data unit is less than the value of k in the second data unit, reduce (m + first threshold - k + correction value) idle data units between the second data unit and the first data unit in the third data flow.

In a fifth possible implementation, when the communication device 701 is configured to perform the foregoing solutions of the receive end device, the processor 702 is specifically configured to: count, starting from the first data unit in the third data flow, the third data units in the third data flow, to obtain a second count; and determine, based on the second count corresponding to the second data unit, the value of m corresponding to the one second data unit of the N second data units in the third data flow, where the second count corresponding to the second data unit is used to indicate the quantity of third data units included between the second data unit and the first data unit in the third data flow. After recovering the first data flow from the third data flow, the processor 702 is further configured to update a value of the second count to the value of k in the second data unit. In an optional implementation, when a second counter is used to count the third data units in the third data flow, optionally, after each time a second data unit carrying k is received and reverse addition or deletion is performed on the received data unit in the third data flow, a value of the second counter also needs to be updated to a value of k. For a detailed example, refer to the solution shown in FIG. 5. Details are not described herein again.

In a first possible implementation, when the communication device 701 is configured to perform the foregoing solutions of the receive end device, the processor 702 is further configured to: when the value of the second count reaches the first threshold, set the value of the second count to zero.

For concepts, explanations, detailed descriptions, and other steps of the communication device that are related to the technical solutions provided in embodiments of this application, refer to the descriptions of the content in the foregoing method embodiments or other embodiments. Details are not described herein again.

Based on the foregoing methods, FIG. 7 is a schematic diagram of a structure of a communication device according to an embodiment of this application. As shown in FIG. 7, the communication device 801 may include a memory 804, a processor 802, and a communication interface 803. The communication interface 803 is configured to input and/or output information. The processor 802 is configured to execute a computer program or instructions, so that the communication device 801 implements the method on the terminal device side in the related solutions in FIG. 1 to FIG. 5. Alternatively, the communication device 801 implements the methods on the transmit end device and/or the receive end device in the related solutions of FIG. 1 to FIG. 5. In this embodiment of this application, the communication interface 803 may implement the solution implemented by the transceiver 703 in FIG. 6, the processor 802 may implement the solution implemented by the processor 702 in FIG. 6, and the memory 804 may implement the solution implemented by the memory 704 in FIG. 6. Details are not described herein again.

Based on the methods provided in embodiments of this application, an embodiment of this application further provides a communication system. The communication system includes the foregoing communication device configured to perform the solutions of the transmit end device and the foregoing communication device configured to perform the solutions of the receive end device.

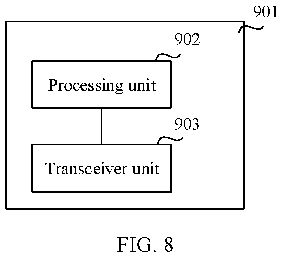

Based on the foregoing embodiments and a same concept, FIG. 8 is a schematic diagram of a communication device according to an embodiment of this application. As shown in FIG. 8, the communication device 901 may be a transmit end device, a receive end device, or a communication device that can perform the foregoing sending function or can perform the foregoing receiving function. The communication device 901 may be a network device, or may be a chip or a circuit, for example, a chip or a circuit that may be disposed in a terminal device or a network device.

The communication device may implement steps performed by the transmit end device and/or the receive end device in the methods corresponding to any one or more of the foregoing methods shown in FIG. 1 to FIG. 5. The communication device may include a processing unit 902 and a transceiver unit 903.

When the communication device 901 is configured to perform the foregoing solutions of the transmit end device, in an optional implementation, the processing unit 902 is configured to: obtain a first data flow, where the first data flow includes a first data unit and N second data units, and N is a positive integer; and insert a number mark k into one second data unit of the N second data units in the first data flow to generate a second data flow, where the number mark k is used to indicate a quantity of third data units included between the second data unit and the first data unit in the first data flow, and k is an integer greater than or equal to zero. The transceiver unit 903 is configured to send the second data flow.

When the communication device 901 is configured to perform the foregoing solutions of the receive end device, in an optional implementation, the transceiver unit 903 is configured to receive a third data flow, where the third data flow includes a first data unit and N second data units, N is a positive integer, one second data unit of the N second data units in the third data flow includes a number mark k, the number mark k is used to indicate a quantity of third data units included between the second data unit and the first data unit in a first data flow, and k is an integer greater than or equal to zero, and the processing unit 902 is configured to recover the first data flow from the third data flow based on a value of k in the second data unit in the third data flow.

For concepts, explanations, detailed descriptions, and other steps of the communication device that are related to the technical solutions provided in embodiments of this application, refer to the descriptions of the content in the foregoing method embodiments or other embodiments. Details are not described herein again.

It may be understood that, for functions of the units in the communication device 901, refer to implementation of corresponding method embodiments. Details are not described herein again.

It should be understood that division into the foregoing units of the communication device is merely logical function division. During actual implementation, all or a part of the units may be integrated into one physical entity, or may be physically separated. In this embodiment of this application, the transceiver unit 903 may be implemented by the transceiver 703 in FIG. 6, and the processing unit 902 may be implemented by the processor 702 in FIG. 6.

According to the method provided in embodiments of this application, this application further provides a computer program product. The computer program product includes computer program code. When the computer program code is run on a computer, the computer is enabled to perform the method in any one of the embodiments shown in FIG. 1 to FIG. 5.

According to the method provided in embodiments of this application, this application further provides a computer-readable storage medium. The computer-readable storage medium stores program code. When the program code is run on a computer, the computer is enabled to perform the method in any one of the embodiments shown in FIG. 1 to FIG. 5.

Based on the methods provided in embodiments of this application, this application further provides a system. The system includes the foregoing communication device of the transmit end device and the foregoing communication device of the receive end device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system and/or a distributed system, and/or across a network such as the internet interacting with other systems by using the signal).

A person of ordinary skill in the art may be aware that, various illustrative logical blocks (illustrative logical blocks) and steps (steps) that are described with reference to embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electrical, a mechanical, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a transmit end device, a first data flow, wherein the first data flow comprises a first data unit and N second data units, and N is an integer greater than 1;
inserting, by the transmit end device, a number mark k into one second data unit of the N second data units in the first data flow to generate a second data flow, wherein the number mark k is used to indicate a quantity of third data units comprised between the second data unit and the first data unit in the first data flow, and k is an integer greater than or equal to zero; and
sending, by the transmit end device, the second data flow.

2. The method according to claim 1, wherein one or more second data units of N second data units in the second data flow further comprise first indication information; and
for one second data unit that is of the N second data units in the second data flow and that comprises the first indication information, the first indication information is used to indicate that there is a number mark k in the second data unit.

3. The method according to claim 1 or 2, wherein the one second data unit of the N second data units in the second data flow comprises a start data unit.

4. The method according to any one of claims 1 to 3, wherein for the one second data unit of the N second data units in the second data flow:
when the quantity of third data units comprised between the second data unit and the first data unit is less than a first threshold, a value of k is the quantity of third data units comprised between the second data unit and the first data unit; or
when the quantity of third data units comprised between the second data unit and the first data unit is not less than a first threshold, a value of k is a value obtained by performing a modulo operation on the first threshold and the quantity of third data units comprised between the second data unit and the first data unit.

5. The method according to any one of claims 1 to 4, wherein the inserting, by the transmit end device, a number mark k into one second data unit of the N second data units in the first data flow to generate a second data flow comprises:
counting, by the transmit end device starting from the first data unit, the third data units in the first data flow, to obtain a first count; and
inserting the number mark k into the one second data unit of the N second data units in the first data flow based on the first count corresponding to the second data unit, to generate the second data flow, wherein the first count corresponding to the second data unit is used to indicate the quantity of third data units comprised between the second data unit and the first data unit in the first data flow.

6. A communication method, wherein the method comprises:
receiving, by a receive end device, a third data flow, wherein the third data flow comprises a first data unit and N second data units, N is an integer greater than 1, one second data unit of the N second data units in the third data flow comprises a number mark k, the number mark k is used to indicate a quantity of third data units comprised between the second data unit and the first data unit in a first data flow, and k is an integer greater than or equal to zero; and
recovering, by the receive end device, the first data flow from the third data flow based on a value of k in the second data unit in the third data flow.

7. The method according to claim 6, wherein the recovering, by the receive end device, the first data flow from the third data flow based on a value of k in the second data unit in the third data flow comprises:
determining, by the receive end device, a value of m corresponding to the one second data unit of the N second data units in the third data flow, wherein m corresponding to the one second data unit is used to indicate a quantity of third data units comprised between the second data unit and the first data unit in the third data flow, and m is an integer greater than or equal to zero; and
recovering, by the receive end device, the first data flow from the third data flow based on the value of m corresponding to the one second data unit of the N second data units in the third data flow and the value of k in the one second data unit of the N second data units in the third data flow.

8. The method according to claim 7, wherein the recovering, by the receive end device, the first data flow from the third data flow based on the value of m corresponding to the one second data unit of the N second data units in the third data flow and the value of k in the one second data unit of the N second data units in the third data flow comprises:
for the one second data unit of the N second data units in the third data flow:
when an absolute value of a difference between the value of m corresponding to the second data unit and the value of k in the second data unit is less than a second threshold:
if the value of m corresponding to the second data unit is greater than the value of k in the second data unit, reducing (m - k + correction value) idle data units between the second data unit and the first data unit in the third data flow; or
if the value of m corresponding to the second data unit is less than the value of k in the second data unit, adding (k - m + correction value) idle data units between the second data unit and the first data unit in the third data flow.

9. The method according to claim 7 or 8, wherein the recovering, by the receive end device, the first data flow from the third data flow based on the value of m corresponding to the one second data unit of the N second data units in the third data flow and the value of k in the one second data unit of the N second data units in the third data flow comprises:
for the one second data unit of the N second data units in the third data flow:
when an absolute value of a difference between the value of m corresponding to the second data unit and the value of k in the second data unit is not less than a second threshold:
if the value of m corresponding to the second data unit is greater than the value of k in the second data unit, adding (k + first threshold - m + correction value) idle data units between the second data unit and the first data unit in the third data flow; or
if the value of m corresponding to the second data unit is less than the value of k in the second data unit, reducing (m + first threshold - k + correction value) idle data units between the second data unit and the first data unit in the third data flow.

10. The method according to any one of claims 7 to 9, wherein when the quantity of third data units comprised between the second data unit and the first data unit in the third data flow is less than the first threshold, the value of m is the quantity of third data units comprised between the second data unit and the first data unit; or
when the quantity of third data units comprised between the second data unit and the first data unit in the third data flow is not less than the first threshold, the value of m is a value obtained by performing a modulo operation on the first threshold and the quantity of third data units comprised between the second data unit and the first data unit in the third data flow.

11. The method according to any one of claims 7 to 10, wherein the determining, by the receive end device, a value of m corresponding to the one second data unit of the N second data units in the third data flow comprises:
counting, by the receive end device starting from the first data unit in the third data flow, the third data units in the third data flow, to obtain a second count; and
determining, based on the second count corresponding to the second data unit, the value of m corresponding to the one second data unit of the N second data units in the third data flow, wherein the second count corresponding to the second data unit is used to indicate the quantity of third data units comprised between the second data unit and the first data unit in the third data flow; and
after the recovering, by the receive end device, the first data flow from the third data flow based on the value of m corresponding to the one second data unit of the N second data units in the third data flow and the value of k in the one second data unit of the N second data units in the third data flow, the method further comprises:
updating a value of the second count to the value of k in the second data unit.

12. The method according to any one of claims 6 to 11, wherein one or more second data units of the N second data units in the third data flow further comprise first indication information; and
for one second data unit that is of the N second data units in the third data flow and that comprises the first indication information, the first indication information is used to indicate that there is a number mark k in the second data unit.

13. The method according to any one of claims 6 to 12, wherein the one second data unit of the N second data units in the third data flow comprises a start data unit.

14. A communication device, wherein the device comprises:
a processor, configured to: obtain a first data flow, wherein the first data flow comprises a first data unit and N second data units, and N is an integer greater than 1; insert a number mark k into one second data unit of the N second data units in the first data flow to generate a second data flow, wherein the number mark k is used to indicate a quantity of third data units comprised between the second data unit and the first data unit in the first data flow, and k is an integer greater than or equal to zero; and
a transceiver, configured to send the second data flow.

15. The device according to claim 14, wherein one or more second data units of N second data units in the second data flow further comprise first indication information; and
for one second data unit that is of the N second data units in the second data flow and that comprises the first indication information, the first indication information is used to indicate that the number mark k is inserted into the second data unit.

16. The device according to claim 14 or 15, wherein the one second data unit of the N second data units in the second data flow comprises a start data unit.

17. The device according to any one of claims 14 to 16, wherein for the one second data unit of the N second data units in the second data flow:
when the quantity of third data units comprised between the second data unit and the first data unit is less than a first threshold, a value of k is the quantity of third data units comprised between the second data unit and the first data unit; or
when the quantity of third data units comprised between the second data unit and the first data unit is not less than a first threshold, a value of k is a value obtained by performing a modulo operation on the first threshold and the quantity of third data units comprised between the second data unit and the first data unit.

18. The device according to any one of claims 14 to 17, wherein the processor is specifically configured to:
for the one second data unit of the N second data units in the first data flow, count, starting from the first data unit, the third data units in the first data flow, to obtain a first count; and
insert the number mark k into the one second data unit of the N second data units in the first data flow based on the first count corresponding to the second data unit, to generate the second data flow, wherein the first count corresponding to the second data unit is used to indicate the quantity of third data units comprised between the second data unit and the first data unit in the first data flow.

19. A communication device, wherein the device comprises:
a transceiver, configured to receive a third data flow, wherein the third data flow comprises a first data unit and N second data units, N is an integer greater than 1, one second data unit of the N second data units in the third data flow comprises a number mark k, the number mark k is used to indicate a quantity of third data units comprised between the second data unit and the first data unit in a first data flow, and k is an integer greater than or equal to zero; and
a processor, configured to recover the first data flow from the third data flow based on a value of k in the second data unit in the third data flow.

20. The device according to claim 19, wherein the processor is specifically configured to:
determine a value of m corresponding to the one second data unit of the N second data units in the third data flow, wherein m corresponding to the one second data unit is used to indicate a quantity of third data units comprised between the second data unit and the first data unit in the third data flow, and m is an integer greater than or equal to zero; and
recover the first data flow from the third data flow based on the value of m corresponding to the one second data unit of the N second data units in the third data flow and the value of k in the one second data unit of the N second data units in the third data flow.

21. The device according to claim 20, wherein the processor is specifically configured to:
for the one second data unit of the N second data units in the third data flow:
when an absolute value of a difference between the value of m corresponding to the second data unit and the value of k in the second data unit is less than a second threshold:
if the value of m corresponding to the second data unit is greater than the value of k in the second data unit, reduce (m - k + correction value) idle data units between the second data unit and the first data unit in the third data flow; or
if the value of m corresponding to the second data unit is less than the value of k in the second data unit, add (k - m + correction value) idle data units between the second data unit and the first data unit in the third data flow.

22. The device according to claim 20 or 21, wherein the processor is specifically configured to:
for the one second data unit of the N second data units in the third data flow:
when an absolute value of a difference between the value of m corresponding to the second data unit and the value of k in the second data unit is not less than a second threshold:
if the value of m corresponding to the second data unit is greater than the value of k in the second data unit, add (k + first threshold - m + correction value) idle data units between the second data unit and the first data unit in the third data flow; or
if the value of m corresponding to the second data unit is less than the value of k in the second data unit, reduce (m + first threshold - k + correction value) idle data units between the second data unit and the first data unit in the third data flow.

23. The device according to any one of claims 20 to 22, wherein when the quantity of third data units comprised between the second data unit and the first data unit in the third data flow is less than the first threshold, the value of m is the quantity of third data units comprised between the second data unit and the first data unit; or
when the quantity of third data units comprised between the second data unit and the first data unit in the third data flow is not less than the first threshold, the value of m is a value obtained by performing a modulo operation on the first threshold and the quantity of third data units comprised between the second data unit and the first data unit in the third data flow.

24. The device according to any one of claims 20 to 23, wherein the processor is specifically configured to:
count, starting from the first data unit in the third data flow, the third data units in the third data flow, to obtain a second count; and
determine, based on the second count corresponding to the second data unit, the value of m corresponding to the one second data unit of the N second data units in the third data flow, wherein the second count corresponding to the second data unit is used to indicate the quantity of third data units comprised between the second data unit and the first data unit in the third data flow; and
after recovering the first data flow from the third data flow, the processor is further configured to update a value of the second count to the value of k in the second data unit.

25. The device according to any one of claims 19 to 24, wherein one or more second data units of the N second data units further comprise first indication information; and
for one second data unit that is of the N second data units in the third data flow and that comprises the first indication information, the first indication information is used to indicate that the number mark k is inserted into the second data unit.

26. The device according to any one of claims 19 to 25, wherein the one second data unit of the N second data units in the third data flow comprises a start data unit.

27. A computer-readable storage medium, wherein the computer-readable storage medium stores computer-executable instructions; and when the computer-executable instructions are invoked by a computer, the computer is enabled to perform the method according to any one of claims 1 to 13.
